# EUROPÄISCHE PATENTSCHRIFT

(11) **EP 1 661 755 B1**
(45) Veröffentlichungstag und Bekanntmachung des Hinweises auf die Patenterteilung: **27.01.2010**
(21) Anmeldenummer: 05025709.6
(22) Anmeldetag: 24.11.2005
(51) Int. Cl.: B60P 1/48, B60P 7/13

(54) **Lastentransportfahrzeug, insbesondere Absetzkipper**
Load carrying vehicle, in particular skip transport vehicle
Véhicule de transport de charges, notamment camion à benne amovible

(30) Priorität: 26.11.2004 DE 102004057179
(43) Veröffentlichungstag der Anmeldung: 31.05.2006
(73) Patentinhaber: Franz Xaver Meiller Fahrzeug- und Maschinenfabrik-GmbH & Co KG, 80997 München (DE)
(72) Erfinder: Stieglbauer, Peter, 85570 Markt-Schwaben (DE)
(74) Vertreter: Tiesmeyer, Johannes

(56) Entgegenhaltungen:
- EP-A- 0 542 600
- DE-B- 1 070 939
- DE-U- 1 938 000
- DE-U1- 20 015 908
- GB-A- 1 426 863
- US-A- 4 165 007

## Beschreibung

Die Erfindung betrifft ein Lastentransportfahrzeug, mit den Merkmalen des Oberbegriffs von Anspruchs 1.

Absetzkipperfahrzeuge werden für den Transport von Wechselbehältern eingesetzt. Bekannte Absetzkipper sind mit hydraulischen Hubvorrichtungen ausgestattet, um Wechselbehälter über das Fahrzeugheck hinweg auf- und abzuladen. Die Hubvorrichtung weist zwei im Wesentlichen parallel zueinander angeordnete und um eine im Heckbereich des Kipperfahrzeugs quer zur Fahrzeuglängsrichtung verlaufende Schwenkachse schwenkbare Hubarme auf, welche so voneinander beabstandet sind, dass sie einen Wechselbehälter zwischen sich aufnehmen können. Jeder der beiden Hubarme weist an seinem freien Ende ein Kettengeschirr zum Anhängen eines Wechselbehälters auf. Als Schwenkantrieb für die Hubarme sind Hydraulikzylinder vorgesehen. Durch Verschwenken der Hubarme kann ein daran angehängter Wechselbehälter über das Heck des Abssetzkipperfahrzeugs hinweg aufgeladen bzw. abgeladen werden.

In einer Kippbetriebsart kann ein Wechselbehälter am Fahrzeug in eine Kippstellung gebracht werden, um Schüttgut oder dgl. über das Fahrzeugheck hinweg auszukippen. Hierzu wird der zunächst auf dem Ladeboden des Absetzkipperfahrzeugs aufstehende Wechselbehälter durch Verschwenken der Hubarme in Richtung Heck nach hinten verlagert, wobei ein in Fangbereitschaftsstellung gebrachter Fänghaken am Fahrzeugheck mit einem Kipplagerbolzen am hinten liegenden Ende des Wechselbehälters in Eingriff kommt. Fanghaken und Kipplagerbolzen funktionieren dann als Kipperlager, wobei sie die Bewegungsfreiheitsgrade des Wechselbehälters auf einen Kippfreiheitsgrad beschränken. Der Wechselbehälter gerät bei Fortsetzung der Schwenkbewegung der Hubarme in Kippstellung, so dass etwaige Ladung über das Fahrzeugheck hinweg nach hinten ausgekippt werden kann. Durch Umkehrung der Schwenkbewegung der Hubarme kann danach der Wechselbehälter wieder auf den Ladeboden des Absetzkipperfahrzeugs aufgesetzt werden.

Aus Sicherheitsgründen ist es erforderlich, den auf dem Ladeboden aufgesetzten Wechselbehälter mittels einer Ladungssicherungseinrichtung gegen Verrutschen zu sichern. Dies erfolgt bei bekannten Absetzkipperfahrzeugen mittels Behälteranschlagsklötzen, an denen der Wechselbehälter auf dem Ladeboden formschlüssig ansteht. Die Behälteranschlagsklötze sind üblicherweise verstellbar an dem Absetzkipperaufbau des Fahrzeugs angeordnet, wobei sie über die Ladebodenebene nach oben hin abstehen, um mit betreffenden Behälterseitenwänden in Anschlagsstellung kommen zu können. Die Einstellbarkeit dieser Behälteranschläge in Klotzform erlaubt eine Anpassung an unterschiedlich geformte bzw. unterschiedlich große Wechselbehälter. Es sind auch bereits Ladungssicherungseinrichtungen für Absetzkipperfahrzeuge bekannt geworden, bei denen die konventionellen Behälteranschläge mittels hydraulischer Antriebe verstellbar sind. Üblicherweise erfolgt die Ladungssicherung mittels solcher Behälteranschläge gegen Verrutschen des Behälters nach vorn und zu den beiden Lateralseiten. Entgegen der Fahrtrichtung können die korrekt eingestellten Tragketten den Behälter sichern.

Ein Beispiel für eine Ladungssicherungseinrichtung mit hydraulisch verstellbaren Behälteranschlägen ist in der DE 200 15 908 U1 erläutert.

Eine Ladungssicherungseinrichtung, bei der ein Wechselbehälter durch am Fahrzeug angebrachte Haken gesichert wird, welche in am Wechselbehältervorgesehene ösen eigreifen, ist aus der GB 1 426 863 A bekannt.

Es ist auch möglich, mit einem Absetzkipperfahrzeug einen Wechselbehälter vom Ladeboden des Fahrzeugs auf einen Anhänger zu transferieren. Bei einem solchen Anhänger sind ebenfalls Ladungssicherungsmaßnahmen zu treffen, um ein Verrutschen des Wechselbehälters zu verhindern.

Bei bekannten Lastentransportfahrzeugen der hier betrachteten Art weist die Ladungssicherungseinrichtung jeweils mindestens zwei Behälteranschläge für jede Behälterseitenwand und zwei Behälteranschläge für die vordere Wand des Wechselbehälters auf. Es liegen somit mindestens sechs Behälteranschläge vor. Eine Ladungssicherungseinrichtung mit einer solch großen Anzahl an einstellbaren Behälteranschlagsklötzen ist aufwendig und hat bei Behälterwechsel einen großen Einstellbedarf, um den Behälter zuverlässig zu sichern.

Der Begriff Lastentransportfahrzeug wird hier sowohl zur Bezeichnung von Absetzkipperfahrzeugen im eigentlichen Sinne als auch zur Bezeichnung von Anhängern zum Transport von Absetzkipper-Wechselbehältern verwendet.

Dokument US 4165007 A zeigt ein Lastentransportfahrzeug mit dem Merkmalen des Oberbegriffs von Anspruch 1.

Der vorliegenden Erfindung liegt die Aufgabe zugrunde, ein Lastentransportfahrzeug der eingangs genannten Art mit einer verbesserten Ladungssicherungseinrichtung bereitzustellen, welche zuverlässig funktioniert und mit einer geringeren Anzahl an Behälteranschlägen oder dgl. auskommt.

Zur Lösung dieser Aufgabe wird erfindungsgemäß ein Lastentransportfahrzeug mit dem Merkmalen von Anspruch 1 vorgeschlagen.

Das Verriegelungselement nimmt den Wechselbehälter in bevorzugter Weise so in Eingriff, dass es ihn nicht nur gegen Verrutschen in Fahrzeuglängsrichtung sichert, sondern auch in Richtung quer dazu, und zwar zu beiden Seiten. Dies erlaubt es, auf zumindest einige, wenn nicht gar alle Behälteranschläge, wie sie bei konventionellen Absetzkipperfahrzeugen vorgesehen sind, zu verzichten und somit die Ladungssicherungseinrichtung erheblich zu vereinfachen. Da bei dem Lastentransportfahrzeug nach der Erfindung das Verriegelungselement den Kipplagerbolzen des Wechselbehälters ggf. auch von oben übergreifen kann, ist der Wechselbehälter auch gegen Abhebebewegungen, etwa bei Fahrt des Lastentransportfahrzeugs auf unebener Fahrbahn gesichert. Bei bevorzugten Ausführungsformen der Erfindung dient das Verriegelungselement auch als Niederhalteelement, welches eine ggf. elastisch nachgiebige Niederhaltekraft auf den in Eingriff genommenen Kipplagerbolzen ausübt.

Vorzugsweise ist das Verriegelungselement im vorderen Bereich des Ladebodens installiert, so dass es den vorn positionierten Kipplagerbolzen eines in normaler Fahrtstellung auf dem Ladeboden befindlichen Absetzkipper-Wechselbehälters beim Übergang von der Entriegelungsstellung in die Verriegelungsstellung verriegelnd in Eingriff nehmen kann. Damit soll aber nicht ausgeschlossen sein, dass ein betreffendes Verriegelungselement im hinteren Bereich des Ladebodens für den hinten positionierten Kipplagerbolzen des Wechselbehälters vorgesehen ist. Ferner kann es in einer Ausführungsform der Erfindung vorgesehen sein, dass sowohl ein vorderes Verriegelungselement als auch ein hinteres Verriegelungselement vorgesehen ist, so dass beide Kipplagerbolzen eines Wechselbehälters verriegelnd in Eingriff genommen werden können. Es ist darauf hinzuweisen, dass es auch Wechselbehälter gibt, welche nur an einer Seite einen Kipplagerbolzen aufweisen, wobei dies dann die Seite ist, welche bei auf dem Lastentransportfahrzeug aufgenommenem Wechselbehälter normalerweise hinten positioniert ist. Bei solchen Behältern kann es zweckmäßig sein, eine Eingriffsmöglichkeit für das Verriegelungselement auch an der Behältervorderseite vorzusehen, so dass auch solche Behälter sicher mit einem das Verriegelungselement im vorderen Ladebodenbereich aufweisenden Lastentransportfahrzeug nach der Erfindung transportiert werden können. Das Verriegelungselement weist vorzugsweise eine Klaue auf, mit der es beim Übergang von der Entriegelungsstellung in die Verriegelungsstellung einen betreffenden Kipplagerbolzen eines in normaler Fahrtstellung auf dem Ladeboden befindlichen Absetzkipper-Wechselbehälters von außen übergreifen kann.

Erfindungsgemäß ist das Verriegelungselement zwischen der Verriegelungsstellung und der Entriegelungsstellung linear verschiebbar, insbesondere horizontal linear verschiebbar, an dem Lastentransportfahrzeug geführt.

Die Ladungssicherungseinrichtung ist gemäß einer bevorzugten Variante der Erfindung mit einer Antriebseinrichtung für das Verriegelungselement ausgestattet, wobei es sich z.B. um eine hydraulische Antriebseinrichtung mit wenigstens einem hydraulischen Zylinder oder um eine elektrische Antriebseinrichtung mit Elektromotor und Spindeltrieb oder dgl. handeln kann.

Vorzugsweise ist das Verriegelungselement in eine inaktive Position unterhalb der Ladebodenebene bewegbar, so dass es keine Störkontur beim Aufsetzen eines Wechselbehälters auf den Ladeboden darstellt.

Erfindungsgemäß weist das Verriegelungselement ein Verriegelungsmaul auf, mit dem es beim Übergang von der Entriegelungsstellung in die Verriegelungsstellung einen betreffenden Kipplagerbolzen oder einen äquivalenten Eingriffsabschnitt eines in normaler Fahrtstellung auf dem Ladeboden befindlichen Absetzkipper-Wechselbehälters in Eingriff nehmen kann.

Dabei ist erfindungsgemäß an dem Verriegelungselement eine Sicherungsklinke zum Öffnen und Schließen des Verriegelungsmaules angeordnet. Das Verriegelungsmaul kann somit einen darin aufgenommenen Kipplagerbolzen an dessen gesamtem Umfang umfassen, so dass der betreffende Wechselbehälter weder vor noch zurück in einem kritischen Maße rutschen kann und auch bei Fahrt über holpriger Straße gut an dem Ladeboden gesichert ist. Das Verriegelungsmaul sollte zweckmäßigerweise eine möglichst große Breite haben, so dass es einen Kipplagerbolzen auf einen großen Teil seiner Länge erfassen kann. Auf diese Weise ermöglicht die Ladungssicherungseinrichtung nach der Erfindung auch eine zuverlässige Sicherung eines Wechselbehälters gegen Verdrehen um eine vertikale Achse auf dem Ladeboden des Lastentransportfahrzeugs. Prinzipiell könnte ein einziges erfindungsgemäß ausgebildetes Verriegelungselement somit sämtliche Behälteranschlagsklötze eines Lastentransportfahrzeugs nach dem Stand der Technik ersetzen. Im Schwerlastbereich mag es jedoch aus Sicherheitsgründen angebracht sein, auch bei dem Lastentransportfahrzeug nach der Erfindung noch einige wenige Behälteranschläge konventioneller Art vorzusehen, insbesondere als Sicherung des Behälters gegen Verdrehen auf dem Ladeboden.

Es wird eine Variante bevorzugt, bei der die Sicherungsklinke an einem Schwenkhebel angeordnet ist, der mittels der Antriebseinrichtung zwischen einer ersten Anschlagsstellung und einer zweiten Anschlagsstellung schwenkbar am Verriegelungselement angeordnet ist, derart, dass die Sicherungsklinke in eine das Verriegelungsmaul freigebende Öffnungsstellung übergeht, wenn der Schwenkhebel in die erste Anschlagsstellung gelangt, wohingegen die Sicherungsklinke in eine das Verriegelungsmaul schließende Schließstellung übergeht, wenn der Schwenkhebel in die zweite Anschlagsstellung gelangt. Es kann somit die Antriebseinrichtung, die zum Bewegen des Verriegelungselementes zwischen der Entriegelungsstellung und der Verriegelungsstellung vorgesehen ist, auch zum Verschwenken des Schwenkhebels mit der Sicherungsklinke und somit zum Öffnen und Schließen des Verriegelungsmauls genutzt werden.

Die Sicherungsklinke ist gemäß einer weiteren Ausführungsform der Erfindung zwischen einer mit der Schließstellung korrespondierenden ersten Klinkenstellung und einer zweiten Klinkenstellung schwenkbar an dem Schwenkhebel angeordnet, derart, dass sie aus ihrer Schließstellung heraus unter Öffnung des Verriegelungsmauls zum Inneren des Verriegelungsmauls hin von einer in Bezug auf das Verriegelungsmaul von außen auf die Sicherungsklinke wirkenden Kraft in die zweite Klinkenstellung verdrängt werden kann, wenn sich der Schwenkhebel in seiner zweiten Schwenkstellung befindet. Diese Ausführungsform ermöglicht es, das Verriegelungselement bei geschlossenem Verriegelungsmaul an den Kipplagerbolzen eines ordnungsgemäß auf dem Ladeboden aufstehenden Wechselbehälters heranzuführen und die Sicherungsklinke dann unter der Wirkung des sie von außen beaufschlagenden Kipplagerbolzens bei weiterer Annäherung des Verriegelungselements an den Wechselbehälter zu verdrängen, so dass sie kurzzeitig in die das Verriegelungsmaul öffnende zweite Klinkenstellung übergeht, um den Kipplagerbolzen in das Verriegelungsmaul des Verriegelungselementes hineinzulassen. Danach kann die Sicherungsklinke in ihre mit der Schließstellung korrespondierende erste Klinkenstellung zurückgehen, so dass der Kipplagerbolzen nunmehr in dem Verriegelungsmaul gefangen ist. Vorzugsweise ist die Sicherungsklinke zu der ersten Klinkenstellung hin federnd vorgespannt, so dass sie nach Aufnahme eines Kipplagerbolzens in dem Verriegelungsmaul selbsttätig in die Schließstellung zurückschnappen kann.

Ein sehr einfaches Getriebe zur Betätigung der Sicherungsklinke und zur Bewegung des Verriegelungselementes ist dadurch realisiert, dass der Schwenkhebel mit einem Zug-Schubgestänge der Antriebseinrichtung verbunden ist, derart, dass er durch Zug bzw. Schub des Zug-Schubgestänges zwischen den beiden Anschlagsstellungen verschwenkbar ist, wobei eine Fortsetzung der Schubbewegung bzw. Zugbewegung des Zug-Schubgestänges nach Einbringen des Schwenkhebels in die erste Anschlagsstellung zur Bewegung des Verriegelungselementes zur Entriegelungsstellung hin führt, wohingegen eine Fortsetzung der Schubbewegung bzw. Zugbewegung des Zug-Schubgestänges nach Einbringen des Schwenkhebels in die zweite Anschlagsstellung zur Bewegung des Verriegelungselementes zur Verriegelungsstellung hin führt. Das Zug-Schubgestänge kann z.B. eine Kolbenstange eines hydraulischen Zylinders umfassen oder von einer solchen gebildet sein, wobei in diesem Fall eine hydraulische Antriebsvorrichtung vorausgesetzt wurde. Im Falle eines elektrischen Antriebs kann das Zug-Schubgestänge z.B. eine Spindel eines Spindeltriebs umfassen oder von dieser gebildet sein. Der maximale Hub des Zug-Schubgestänges bzw. der maximale Verschiebeweg des Verriegelungselementes kann bedarfsweise lang dimensioniert sein, so dass entsprechend unterschiedlich große oder/und unterschiedlich auf dem Ladeboden positionierte Wechselbehälter gesichert werden können.

Die Erfindung wird nachstehend unter Bezug auf die Zeichnungen näher erläutert.

Darin zeigen
die Fig. 1a und 1b einen Absetzkipper-Wechselbehälter symmetrischer Bauart mit einem jeweiligen Kipplagerbolzen an beiden Längsendseiten in Seitenansicht und in Vorderansicht,
Fig. 2a - 2d in schematischer Darstellung das Verriegelungselement mit zugehöriger Antriebseinrichtung in vier verschiedenen Einstellungen während der Verriegelung und anschließender Entriegelung eines Behälters nach den Fig. 1 a und 1 b auf dem Ladeboden eines Lastentransportfahrzeugs,
Fig. 3 einen Ausschnitt eines Wechselbehälters in Seitenansicht mit einer Alternative der Anordnung eines Kipplagerbolzens und
Fig. 4 einen weiteren Wechselbehälter, der zum gesicherten Transport mit einem Lastentransportfahrzeug nach der Erfindung geeignet ist.
Fig. 5 bis 10 zeigen in skizzenhafter schematischer Darstellung weitere Varianten der Verriegelung eines Wechselbehälters.

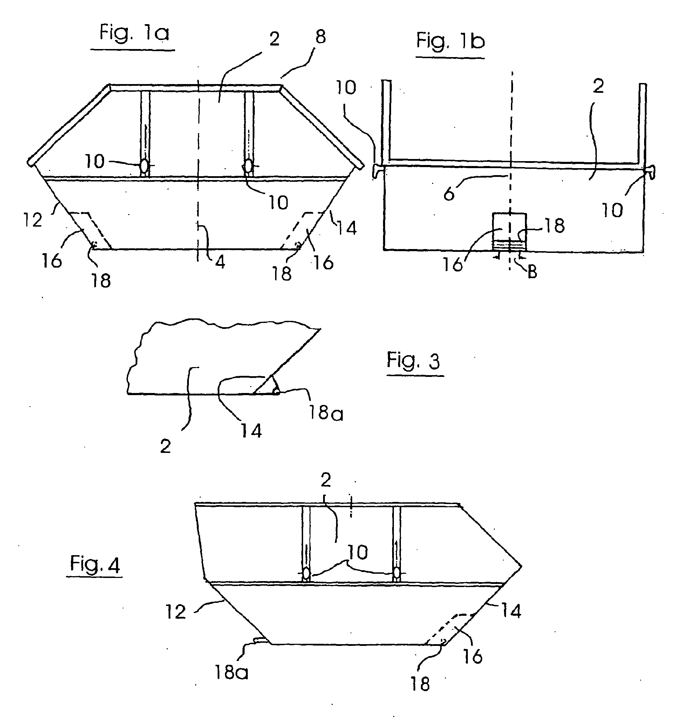

Der Wechselbehälter 2 gemäß Fig. 1 a und 1 b ist in Bezug auf die Ebenen 4 und 6 symmetrisch aufgebaut. Der an seiner Oberseite 8 offene Wechselbehälter 2 hat an seinen Seitenwänden jeweils zwei Aufhängezapfen 10 zur Befestigung des Kettengeschirrs eines Absetzkipperfahrzeugs. An den Längsendseiten 12 und 14 weist der Wechselbehälter 2 eine jeweilige kassettenartige Ausnehmung 16 auf, die sich im unteren Bereich in Behältermitte befindet. In jeder Ausnehmung 16 befindet sich ein horizontal verlaufender und am Wechselbehälter fixierter Kipplagerbolzen 18. Der in der Positionierung des Wechselbehälters auf dem Ladeboden eines Absetzkippers hinten liegende Kipplagerbolzen 18 wird in der Kippbetriebsart des Absetzkippers von einem Fanghaken in Eingriff genommen, so dass der Wechselbehälter 2 um eine von dem Kipplagerbolzen 18 definierte Kippachse gekippt werden kann.

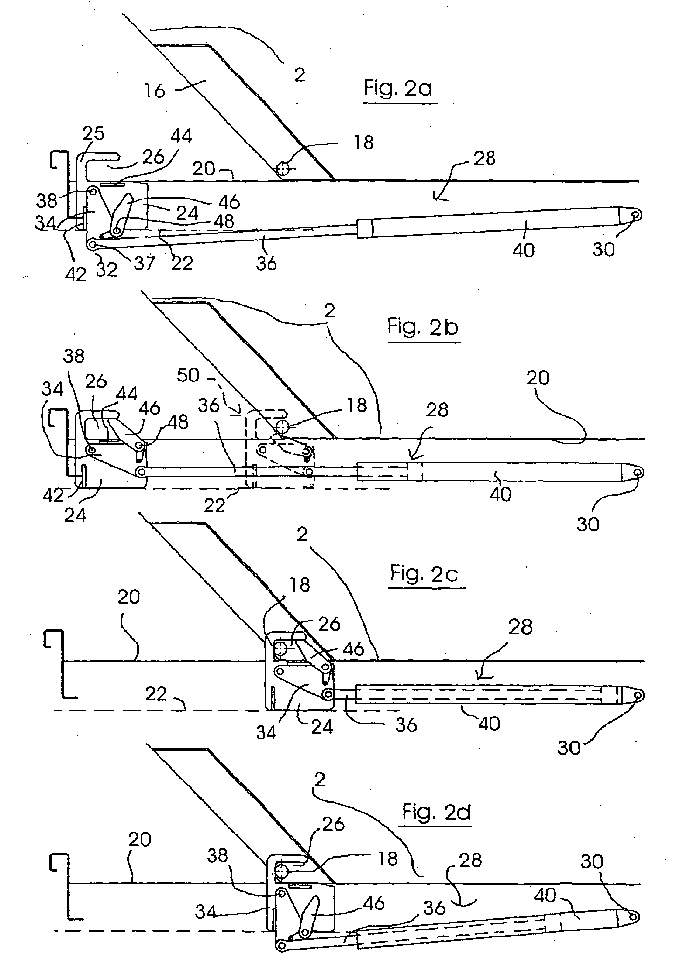

In der Absetzstellung eines Wechselbehälters 2 auf dem Ladeboden eines Absetzkippers hatten die Kipplagerbolzen 18 bisher keine Funktion. Dies ändert sich nun bei der Realisierung der vorliegenden Erfindung, wie dies anhand der Fig. 2a - 2d im Folgenden erläutert wird.

In den Fig. 2a - 2d ist der vordere untere Bereich eines Wechselbehälters 2 der in den Fig. 1a und 2b gezeigten Bauart auf einem bei 20 angedeuteten Ladeboden eines Lastentransportkipperfahrzeugs in einer Längsschnittdarstellung gezeigt, deren Schnittebene mit der in Fig. 1b eingezeichneten Symmetrieebene 6 im Wesentlichen übereinstimmt. Fig. 2a zeigt den Wechselbehälter 2 in normaler Fahrtstellung auf dem Ladeboden 20, wobei der in Fahrtrichtung vorne positionierte Kipplagerbolzen 18 als das von der Ladungssicherungseinrichtung in Eingriff zu nehmende Element erkennbar ist. Die Ladungssicherungseinrichtung umfasst ein linear längs einer bei 22 schematisch angedeuteten Führung zwischen einer Entriegelungsstellung (vgl. Fig. 2a und Fig. 2b) und einer Verriegelungsstellung (vgl. Fig. 2c und Fig. 2d) in Fahrzeuglängsrichtung verschiebbares Verriegelungselement 24 mit einer Verriegelungsklaue 25 bzw. einem Verriegelungsmaul 26. Das Verriegelungsmaul 26 ist gemäß Fig. 2a zur Fahrzeugrückseite hin offen und so positioniert, dass es beim Zurückziehen des Verriegelungselementes 24 von der Stellung gemäß Fig. 2a in die Stellung gemäß Fig. 2c den Kipplagerbolzen 18 in Eingriff nimmt.

Das Verriegelungselement 24 ist mittels einer hydraulischen Antriebseinrichtung längs der Horizontalführung 22 verschiebbar. Die Antriebseinrichtung umfasst einen Hydraulikzylinder 28, der bei 30 an dem Lastentransportfahrzeug um eine horizontale Schwenkachse schwenkbar angeordnet ist. An dem kolbenstangenseitigen Ende 32 ist der Zylinder 28 mit einem Schwenkhebel 34 gelenkig verbunden. Der an dem Verriegelungselement 24 angeordnete Schwenkhebel 34 ist zwischen der Anschlagstellung gemäß Fig. 2a und der Anschlagsstellung gemäß Fig. 2b durch partielles Ein- und Ausfahren der Kolbenstange 36 verschwenkbar, und zwar um die zu den Gelenkachsen 30 und 37 parallele horizontale Schwenkachse 38. Soll nun der Behälter 2 aus der Situation gemäß Fig. 2a heraus auf dem Ladeboden 20 verriegelt werden, so wird die Antriebseinrichtung aktiviert, um die Kolbenstange 36 ins Zylinderrohr 40 des hydraulischen Zylinders 28 einzuziehen. Dabei gelangt zunächst der Schwenkhebel 34 von der ersten Anschlagsstellung gemäß Fig. 2a in die zweite Anschlagsstellung gemäß Fig. 2b. Die Anschlagsstellungen sind durch die Anschläge 42 und 44 an dem Verriegelungselement 24 definiert. In der ersten Anschlagsstellung liegt der Schwenkhebel 34 an dem Anschlag 42 an (Fig. 2a), wohingegen er in der zweiten Schwenkstellung an dem Anschlag 44 anliegt (vgl. Fig. 2b).

An dem Schwenkhebel 34 ist eine Sicherungsklinke 46 um die horizontale Achse 48 schwenkbar angeordnet. In den Fig. 2a - 2d ist die Sicherungsklinke 46 in einer ersten Klinkenstellung relativ zu dem Schwenkhebel 34 dargestellt, wobei es sich um eine Vorzugsstellung handelt, zu der die Sicherungsklinke 46 federnd vorgespannt ist. Der Federvorspannmechanismus ist in den Figuren nicht gezeigt. Wie aus den Fig. 2b und 2c zu erkennen ist, verschließt die Sicherungsklinke 46 das Verriegelungsmaul 26, wenn der Schwenkhebel 34 in seiner zweiten Anschlagsstellung ist. Die Sicherungsklinke 46 liegt dabei mit ihrem freien Ende so an der oberen Innenfläche des Verriegelungsmauls 26 an, dass sie nicht nach außen um die Achse 48 verschwenkt werden kann.

Wird die Kolbenstange 36 nun ausgehend von der Situation gemäß Fig. 2b weiter in das Zylinderrohr 40 eingezogen, so zieht sie in ihrer im Wesentlichen zur Führung 22 parallelen Ausrichtung das Verriegelungselement 24 in Richtung zu dem Kipplagerbolzen 18. Dabei kommt die Sicherungsklinke 46 mit dem Kipplagerbolzen 18 in Kontakt und wird von diesem in eine zweite Klinkenstellung verdrängt, wie dies in Fig. 2b bei 50 mit gestrichelten Linien angedeutet ist. Sobald der Kipplagerbolzen 18 weit genug in dem Verriegelungsmaul 26 aufgenommen ist, kann die Sicherungsklinke 46 in die Schließstellung zurückschnappen, so dass der Kipplagerbolzen 18 in der in Fig. 2c gezeigten Weise an seinem gesamten Umfang von Teilen des Verriegelungselementes 24 umgeben und somit allseitig gesichert ist. In Fig. 2c ist somit der Wechselbehälter 2 auf dem Ladeboden 22 gegen Verrutschen gesichert.

Soll nun der Wechselbehälter aus der Situation gemäß Fig. 2c heraus wieder freigegeben werden, so ist die Antriebseinrichtung zu aktivieren, damit die Kolbenstange 36 wieder aus dem Zylinderrohr 40 des hydraulischen Zylinders 28 ausgefahren wird. Dabei wird zunächst der Schwenkhebel 34 aus der zweiten Anschlagsstellung heraus in die erste Anschlagsstellung überführt. Bei weiterem Herausschieben der Kolbenstange 36 aus dem Zylinderrohr 40 wird dann das Verriegelungselement 24 ausgehend von der Situation gemäß Fig. 2d in Fahrzeuglängsrichtung nach vorn geschoben, bis es wieder die Stellung gemäß Fig. 2a eingenommen hat. Der Wechselbehälter 2 kann dann mit einem Hubgerät des Lastentransportfahrzeugs abgeladen oder ggf. in der Kippbetriebsart in Kippstellung gebracht werden.

In Fig. 1b ist bei B ein Breitenmaß für die Breite des Verriegelungsmauls 26 des Verriegelungselementes 24 aus den Fig. 2a - 2d als Beispiel eingezeichnet.

Das Ausführungsbeispiel der Erfindung gemäß den Fig. 2a - 2d kann in vielfältiger Weise variiert werden. So besteht die Möglichkeit, das Verriegelungselement 24 so zu führen, dass es in der Entriegelungsstellung vollständig unterhalb des Ladebodens abtaucht.

Anstelle eines oder mehrerer Hydraulikzylinder könnte ein elektrischer Spindeltrieb als Antriebsmittel für das Verriegelungselement vorgesehen sein.

Nachzutragen ist noch, dass bei entsprechender Dimensionierung die Ladungssicherungseinrichtung nach der Erfindung dazu benutzt werden kann, den Behälter 2 auf dem Ladeboden 20 im Rahmen einer bestimmten Toleranz zu verschieben, um ihn in eine vorbestimmte Position zu bringen. Der maximale Hub bzw. Verschiebeweg des Verriegelungselementes kann durchaus so dimensioniert sein, dass er z.B. bis zu 1000 mm beträgt, um unterschiedlich große Behälter sichern zu können.

Die Ladungssicherungseinrichtung nach der Erfindung funktioniert auch mit Wechselbehältern, bei denen ein betreffender Kipplagerbolzen 18a in der in Fig. 3 gezeigten Weise außen mit Abstand von der Endwand 14 angeordnet ist.

Fig. 4 zeigt einen nicht symmetrischen Wechselbehälter 2, bei dem ursprünglich nur ein Kipplagerbolzen 18 vorgesehen war, und zwar an der Endseite 14, die bei Aufnahme des Wechselbehälters 2 auf den Ladeboden des Fahrzeugs hinten zu positionieren ist. Damit aber auch ein solcher Behälter 2 gemäß Fig. 4 mit einer vorderen Ladungssicherungseinrichtung gemäß den Fig. 2a - 2d auf dem Lastentransportfahrzeug zu sichern ist, wurde der Behälter 2 in Fig. 4 mit einem "Dummy-Kipplagerbolzen" 18a an der Vorderseite 12 versehen. Das Element 18a dient somit zu Verriegelungszwecken auf dem Fahrzeug.

Anzumerken ist auch noch, dass im Rahmen der Erfindung Sicherheitsmaßnahmen betreffend den Betrieb der Hubvorrichtung des Absetzkippers in Abhängigkeit vom Zustand der Ladungssicherungseinrichtung getroffen sind. So ist es gemäß einer Variante der Erfindung vorgesehen, dass eine Schwenkbewegung der Hubarme eines als Absetzkipper ausgebildeten Lastentransportfahrzeugs automatisch unterbunden wird, solange das Verriegelungselement der Ladungssicherungseinrichtung im Behälterverriegelungszustand ist.

Ferner können Überwachungsmittel vorgesehen sein, die den Verriegelungszustand eines Wechselbehälters auf dem Ladeboden anzeigen bzw. detektieren.

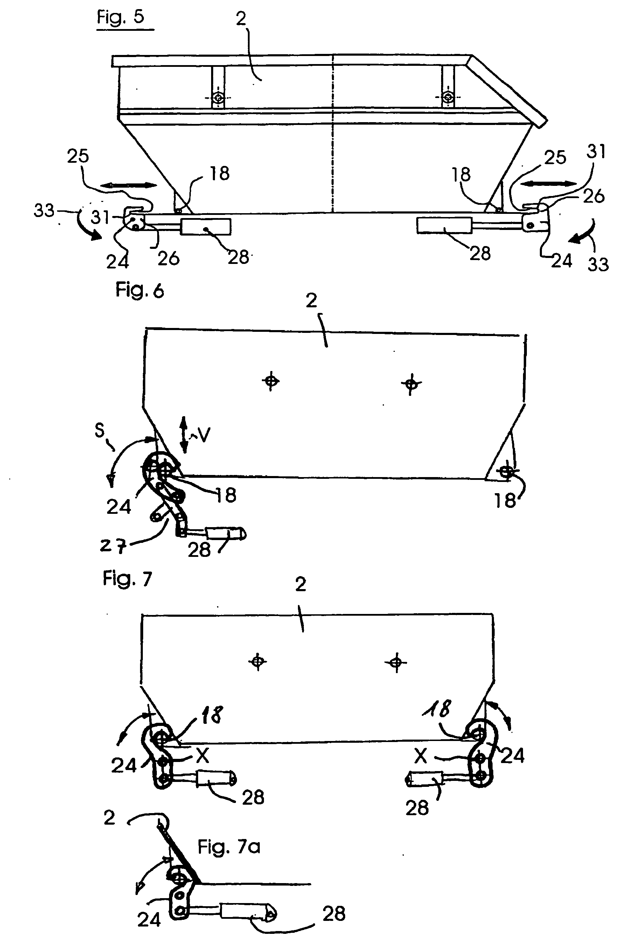

In den Fig. 5 - 10 sind skizzenhaft und schematisch weitere Beispiele für Möglichkeiten der Verriegelung eines Wechselbehälters 2 an dessen Kipplagerbolzen 18 gezeigt. Elemente in den Figuren 5 - 10, die gegenständlich oder von ihrer Wirkungsweise Elementen in den Fig. 2a - 2d im Wesentlichen entsprechen, sind mit jeweils gleichen Bezugszeichen gekennzeichnet.

Bei dem besonders bevorzugten Beispiel, der Fig. 5 besteht die Möglichkeit, den Behälter 2 an beiden Kipplagerbolzen 18 mit einem Verriegelungselement 24 zu sichern. Bei dem Beispiel der Fig. 5 hat das Verriegelungselement keine Sicherungsklinke der in den Fig. 2a - 2d gezeigten Art. Wenngleich in Fig. 5 für jedes Verriegelungselement ein eigener Hydraulikzylinder 28 dargestellt ist, so könnten in einer alternativen Ausführungsform die Verriegelungselemente 24 über ein Koppelgetriebe oder dgl. gekoppelt sein, welches den Antrieb der Verriegelungselemente 24 mit nur einem einzigen Antriebszylinder 28 ermöglicht. Die Ladungssicherungseinrichtung nach Fig. 5 ist z.B. für einen Kipprahmen geeignet, welcher das Kippen des Ladebodens ermöglicht.

Ein sehr vorteilhaftes Merkmal in Fig. 5 ist die Schrägfläche 25 an der oberen Innenseite des jeweiligen Verriegelungsmauls 26. Sie verläuft von der Eintrittsseite des Verriegelungsmauls 26 her von oben zum Grund 31 des Verriegelungsmauls 26 hin schräg nach unten, so dass sie bei horizontaler Annäherung des Verriegelungselementes 24 an den Wechselbehälter 2 den Kipplagerbolzen 18 niederspannend beaufschlagen kann. Es kann auch bei dem Beispiel gemäß Fig. 5 vorgesehen sein, dass die Verriegelungselemente 24 vermittels einer Schub-Drehverbindung an ihre Antriebselemente 28 angelenkt sind, so dass sie beim Übergang in die Entriegelungsstellung unter das Niveau der Ladebodenfläche verschwenkbar sind (vgl. Pfeil 33).

Bei dem Beispiel nach Fig. 6 ist zwischen dem Antriebszylinder 28 und dem hakenförmigen Verriegelungselement 24 ein Gelenksystem 27 zwischengeschaltet, welches eine Schwenkbewegung S und eine Vertikalbewegung V des Verriegelungselementes 24 durch Betätigung des Zylinders 28 ermöglicht, wobei das Verriegelungselement 24 als von oben auf den Kipplagerbolzen 18 drückendes Niederhalteelement wirksam werden kann.

Bei dem Beispiel gemäß Fig. 7 ist als Verriegelungselement 24 ein um die Achse X verschwenkbares Hakenelement zur lneingriffnahme des Kipplagerbolzens 18 vorgesehen. Im Beispielsfall der Fig. 7 können beide Kipplagerbolzen 18 des Wechselbehälters 2 verriegelnd in Eingriff genommen werden.

Fig. 7a zeigt eine Variante des Beispiels nach Fig. 7, bei der das schwenkbare Verriegelungselement 24 den Kipplagerbolzen 18 von der Behälterseite her in Eingriff nimmt.

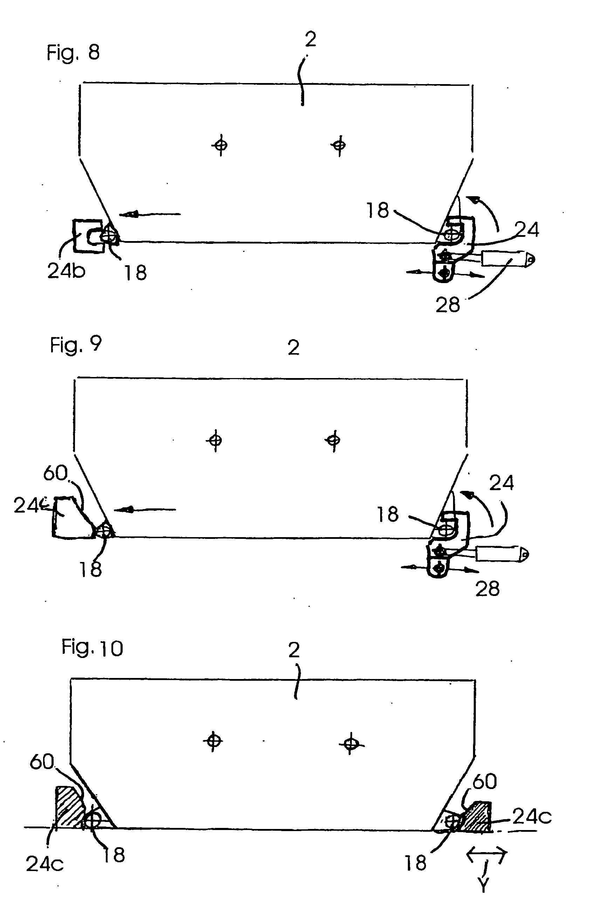

Fig. 8 zeigt eine Variante, bei der ein bewegbares Verriegelungselement 24 für einen Kipplagerbolzen 18 und ein relativ zum Ladeboden fixiertes Verriegelungselement 24b für den anderen Kipplagerbolzen 18 vorgesehen ist. Als spezielle Variante dieses Konzepts mit einer starren und einer beweglichen Verriegelungsanordnung ist das Verriegelungselement 24 sowohl verschwenkbar, um es bedarfsweise unterhalb der Ladebodenebene abtauchen zu lassen, und horizontal translatorisch verschiebbar, um den Wechselbehälter 2 bei Bedarf so zu verschieben, dass das starre Verriegelungselement 24b den betreffenden Kipplagerbolzen 18 in Eingriff nehmen kann.

Bei dem Beispiel gemäß Fig. 9 handelt es sich um eine Abwandlung des Beispiels aus Fig. 8 insoweit, als anstelle des Verriegelungsmauls 24b ein Anschlagklotz 24c in Fig. 9 vorgesehen ist, gegen den der Kipplagerbolzen 18 bei Verschiebung des Wechselbehälters 2 durch Bewegung des Verriegelungselementes 24 anschlägt.

Fig. 10 zeigt eine Beispiel, welches zwei Anschlagsklötze 24c, 24c' als Verriegelungselemente an dem Ladeboden aufweist. In einer einfachen Variante sind diese Anschlagsklötze starr fixiert. Ihr Abstand voneinander ist so gewählt, dass sie einen Wechselbehälter 2 in der skizzierten Weise sicher aufnehmen können und dabei an den Kipplagerbolzen 18 gegen Verrutschen sichern. Die Verriegelungsklötze 24c, 24c' haben schräg nach unten verlaufende Einweisflächen 60 für den Behälter 2. Diese Einweisflächen 60 führen den Behälter 2 beim Aufsetzen auf den Ladeboden in die korrekte Stellung gemäß Fig. 10. Das Beispiel gemäß Fig. 10 ist Abwandlungen zugänglich, so kann es vorgesehen sein, dass wenigstens einer der beiden Verriegelungsklötze 24c, 24c' gegen eine rückstellende Federkraft auslenkbar ist, wie dies durch den Pfeil Y angedeutet ist.

Sämtliche Ausführungsformen der Erfindung haben gemeinsam, dass Verriegelungsmittel bereitgestellt werden, welche dazu dienen, einen Wechselbehälter an einem oder mehreren Kipplagerbolzen auf dem Ladeboden des Lastentransportfahrzeugs gegen Verrutschen zu sichern.

Es besteht die Möglichkeit, dass Wechselbehälter an einer oder ggf. an beiden Seiten zwei oder mehrere Kipplagerbolzen aufweisen, welche in der Kippbetriebsart jeweils von einem eigenen Fanghaken in Eingriff genommen werden. Es ist im Rahmen der Erfindung selbstverständlich denkbar, dass in einem solchen Fall auch mehrere Verriegelungselemente bei einem Lastentransportfahrzeug nach der Erfindung vorgesehen sein können, um diese mehrfachen Kipplagerbolzen verriegelnd oder/und niederhaltend in Eingriff zu nehmen.

## Patentansprüche

1. Lastentransportfahrzeug, insbesondere Absetzkipper, mit einem Ladeboden (20) als Unterlage für einen mittels einer Hubvorrichtung auf den Ladeboden aufzusetzenden bzw. von dem Ladeboden abzuhebenden Absetzkipper-Wechselbehälter (2), der in seinem unteren Bereich vorn und hinten einen jeweiligen Kipplagerbolzen (18) aufweist, und mit einer Ladungssicherungseinrichtung zur Sicherung eines Wechselbehälters (2) gegen Verrutschen auf dem Ladeboden (20),
wobei die Ladungssicherungseinrichtung ein Verriegelungselement (24) aufweist, welches relativ zum Ladeboden (20) zwischen einer Verriegelungsstellung und einer Entriegelungsstellung in der Weise bewegbar an dem Lastentransportfahrzeug angeordnet ist, dass es beim Übergang von der Entriegelungsstellung in die Verriegelungsstellung einen Kipplagerbolzen (18) eines auf dem Ladeboden (20) in normaler Fahrtstellung positionierten Absetzkipper-Wechselbehälters (2) verriegelnd in Eingriff nehmen kann, um den Absetzkipper-Wechselbehälter (2) zu sichern,
wobei das Verriegelungselement (24) ein Verriegelungsmaul (26) aufweist, mit dem es beim Übergang von der Entriegelungsstellung in die Verriegelungsstellung einen betreffenden Kipplagerbolzen (18) eines in normaler Fahrtstellung auf dem Ladeboden (20) befindlichen Absetzkipper-Wechselbehälters (2) in Eingriff nehmen kann,
**dadurch gekennzeichnet, dass** das Verriegelungselement (24) zwischen der Verriegelungsstellung und der Entriegelungsstellung linear verschiebbar an dem Lastentransportfahrzeug geführt ist,
wobei an dem Verriegelungselement (24) eine Sicherungsklinke (46) zum Öffnen und Schließen des Verriegelungsmaules (26) angeordnet ist.

2. Lastentransportfahrzeug nach Anspruch 1, **dadurch gekennzeichnet, dass** das Verriegelungselement (24) im vorderen Bereich des Ladebodens (20) installiert und dazu eingerichtet ist, den vorn positionierten Kipplagerbolzen (18) eines in normaler Fahrtstellung auf dem Ladeboden (20) befindlichen Absetzkipper-Wechselbehälters (2) beim Übergang von der Entriegelungsstellung in die Verriegelungsstellung verriegelnd in Eingriff zu nehmen.

3. Lastentransportfahrzeug nach Anspruch 1 oder 2, **dadurch gekennzeichnet, dass** das Verriegelungselement eine Klaue (25) aufweist, mit der es beim Übergang von der Entriegelungsstellung in die Verriegelungsstellung einen betreffenden Kipplagerbolzen (18) eines in normaler Fahrtstellung auf dem Ladeboden (20) befindlichen Absetzkipper-Wechselbehälters (2) von außen übergreifen kann.

4. Lastentransportfahrzeug nach einem der vorhergehenden Ansprüche, **dadurch gekennzeichnet, dass** die Ladungssicherungseinrichtung eine Antriebseinrichtung (28) für das Verriegelungselement aufweist.

5. Lastentransportfahrzeug nach Anspruch 4, **dadurch gekennzeichnet, dass** die Antriebseinrichtung einen hydraulischen Zylinder (28) oder/ und einen Elektromotor als steuerbares Antriebsmittel umfasst.

6. Lastentransportfahrzeug nach einem der vorhergehenden Ansprüche, **dadurch gekennzeichnet, dass** das Verriegelungselement in eine inaktive Position unterhalb der Ladebodenebene bewegbar ist.

7. Lastentransportfahrzeug nach einem der vorhergehenden Ansprüche, **dadurch gekennzeichnet, dass** das Verriegelungsmaul (26) an seiner den Kipplagerbolzen (18) bei dessen Verriegelung von oben übergreifenden Innenseite eine von der Eintrittsseite des Verriegelungsmauls (26) her von oben zum Grund (31) des Verriegelungsmauls (26) hin schräg nach unten verlaufende Fläche (25) aufweist, die den Kipplagerbolzen (18) bei dessen Verriegelung niederspannend beaufschlagt.

8. Lastentransportfahrzeug nach einem der vorhergehenden Ansprüche, **dadurch gekennzeichnet, dass** die Ladungssicherungseinrichtung sowohl für den vorderen Kipplagerbolzen (18) als auch für den hinteren Kipplagerbolzen (18) eines Wechselbehälters (2) ein jeweiliges Verriegelungselement (24) vorzugsweise gleicher Bauart aufweist.

9. Lastentransportfahrzeug nach Anspruch 4, **dadurch gekennzeichnet, dass** die Sicherungsklinke (46) an einem Schwenkhebel (34) angeordnet ist, der mittels der Antriebseinrichtung (28) zwischen einer ersten Anschlagsstellung und einer zweiten Anschlagstellung schwenkbar am Verriegelungselement (24) angeordnet ist, derart, dass die Sicherungsklinke (46) in eine das Verriegelungsmaul (26) freigebende Öffnungsstellung übergeht, wenn der Schwenkhebel (34) in die erste Anschlagsstellung gelangt, wohingegen die Sicherungsklinke (46) in eine das Verriegelungsmaul (26) schließende Schließstellung übergeht, wenn der Schwenkhebel (34) in die zweite Anschlagsstellung gelangt.

10. Lastentransportfahrzeug nach Anspruch 9, **dadurch gekennzeichnet, dass** die Sicherungsklinke (46) zwischen einer mit der Schließstellung korrespondierenden ersten Klinkenstellung und einer zweiten Klinkenstellung schwenkbar an dem Schwenkhebel (34) angeordnet ist, derart, dass sie aus ihrer Schließstellung heraus unter Öffnung des Verriegelungsmauls (26) zum Inneren des Verriegelungsmauls (26) hin von einer in Bezug auf das Verriegelungsmaul von außen auf die Sicherungsklinke (46) wirkenden Kraft in die zweite Klinkenstellung verdrängt werden kann, wenn sich der Schwenkhebel (34) in seiner zweiten Schwenkstellung befindet.

11. Lastentransportfahrzeug nach Anspruch 10, **dadurch gekennzeichnet, dass** die Sicherungsklinke (46) zu der ersten Klinkenstellung hin federnd vorgespannt ist.

12. Lastentransportfahrzeug nach einem der Ansprüche 9 bis 11, **dadurch gekennzeichnet, dass** der Schwenkhebel (34) mit einem Zug-Schubgestänge (36) der Antriebseinrichtung (28) verbunden ist, derart, dass er durch Zug bzw. Schub des Zug-Schubgestänges (36) zwischen den beiden Anschlagsstellungen verschwenkbar ist, wobei eine Fortsetzung der Schubbewegung bzw. Zugbewegung des Zug-Schubgestänges (36) nach Einbringen des Schwenkhebels (34) in die erste Anschlagsstellung zur Bewegung des Verriegelungselementes (24) zur Entriegelungsstellung hin führt, wohingegen eine Fortsetzung der Schubbewegung bzw. Zugbewegung des Zug-Schubgestänges (36) nach Einbringen des Schwenkhebels (34) in die zweite Anschlagsstellung zur Bewegung des Verriegelungselementes (24) zur Verriegelungsstellung hin führt.

13. Lastentransportfahrzeug nach Anspruch 12, **dadurch gekennzeichnet, dass** das Zug-Schubgestänge eine Kolbenstange (36) eines hydraulischen Zylinders (28) umfasst.

14. Lastentransportfahrzeug nach Anspruch 12, **dadurch gekennzeichnet, dass** das Zug-Schubgestänge eine Spindel eines elektrischen Spindeltriebs umfasst.

15. Lastentransportfahrzeug nach einem der vorhergehenden Ansprüche, **dadurch gekennzeichnet, dass** das Verriegelungsmaul (26) eine Maulbreite von mehr als 100 mm, insbesondere mehr als 150 mm aufweist.

## Claims

1. A load-conveying vehicle, in particular a bucket loader, with a load base (20) as a base for a bucket loader lift-on lift-off tipping container (2) to be set down on the load base and to be lifted from the load base by means of a lifting device, which lift-on lift-off tipping container has in its lower zone a respective tipping pivot pin (18) at the front and rear, and with a load-securing device to prevent a lift-on lift-off tipping container (2) from sliding on the load base (20),
wherein the load-securing device has a locking element (24) which is arranged to be movable relative to the load base (20) between a locking position and a release position on the load-conveying vehicle in such a way that, in the transition from the release position into the locking position, it can engage and lock a tipping pivot pin (18) of a bucket loader lift-on lift-off tipping container (2) positioned on the load base (20) in the normal travel position so as to secure the bucket loader lift-on lift-off tipping container (2),
wherein the locking element (24) has a locking jaw (26) with which it can engage, in the transition from the release position into the locking position, a respective tipping pivot pin (18) of a bucket loader lift-on lift-off tipping container (2) situated on the load base (20) in the normal travel position,
**characterised in that** the locking element (24) is guided in a linearly displaceable manner between the locking position and the release position on the load-conveying vehicle
wherein a safety pawl (46) is provided on the locking element (24) for opening and closing the locking jaw (26).

2. A load-conveying vehicle according to Claim 1, **characterised in that** the locking element (24) is installed in the front region of the load base (20) and is set up so as to engage and lock the forwardly positioned tipping pivot pin (18) of a bucket loader lift-on lift-off tipping container (2) situated on the load base (20) in the normal travel position in the transition from the release position into the locking position.

3. A load-conveying vehicle according to Claim 1 or 2, **characterised in that** the locking element (24) has a claw (25) with which, in the transition from the release position into the locking position, it can externally engage around a respective tipping pivot pin (18) of a bucket loader lift-on lift-off tipping container (2) situated on the load base (20) in the normal travel position.

4. A load-conveying vehicle according to any one of the preceding Claims, **characterised in that** the load-securing device has a drive device (28) for the locking element.

5. A load-conveying vehicle according to Claim 4, **characterised in that** the drive device comprises a hydraulic cylinder (28) and/or an electric motor as controllable drive means.

6. A load-conveying vehicle according to any one of the preceding Claims, **characterised in that** the locking element can move into in inoperative position under the load base plane.

7. A load-conveying vehicle according to any one of the preceding Claims, **characterised in that**, on its inside engaging from above around the tipping pivot pin (18) during its locking, the locking jaw (26) has a surface (25) which extends upwards from the inlet side of the locking jaw (26) and obliquely downwards towards the bottom (31) of the locking jaw (26), and which acts on the tipping pivot pin (18) so as to tension it downwardly during its locking.

8. A load-conveying vehicle according to any one of the preceding Claims, **characterised in that** the load-securing device has a respective locking element (24) preferably of the same design both for the front tipping pivot pin (18) and for the rear tipping pivot pin (18) of a lift-on lift-off tipping container (2).

9. A load-conveying vehicle according to Claim 4, **characterised in that** the safety pawl (46) is arranged on a pivot lever (34) which is pivotably mounted on the locking element (24) by means of the drive device (28) between a first stop position and a second stop position in such a way that the safety pawl (46) passes into an open position releasing the locking jaw (26) when the pivot lever (34) reaches the first stop position, whereas the safety pawl (46) passes into a closed position closing the locking jaw (26), when the pivot lever (34) reaches the second stop position.

10. A load-conveying vehicle according to Claim 9, **characterised in that** the safety pawl (46) is pivotably mounted on the pivot lever (34) between a first pawl position corresponding to the closed position and second pawl position in such a way that it can be displaced into the second pawl position from its closed position, while opening the locking jaw (26), towards the interior of the locking jaw (26) by a force acting outwardly in relation to the locking jaw (26) on to the safety pawl (46), when the pivot lever (34) is situated in its second pivot position.

11. A load-conveying vehicle according to Claim 10, **characterised in that** the safety pawl (46) is spring-loaded towards the first pawl position.

12. A load-conveying vehicle according to any one of Claims 9 to 11, **characterised in that** the pivot lever (34) is connected to a push-pull linkage (36) of the drive device (28) so that it can be pivoted between the two stop positions by pushing or pulling the push-pull linkage (36), wherein a continuation of the pushing movement or pulling movement of the push-pull linkage (36), after the pivot lever (34) is brought into the first stop position, results in movement of the locking element (24) towards the release position, whereas a continuation of the pushing movement or pulling movement of the push-pull linkage (36), after the pivot lever (34) is brought into the second stop position, results in movement of the locking element (24) towards the locking position.

13. A load-conveying vehicle according to Claim 12, **characterised in that** the push-pull linkage (36) comprises a piston rod (36) of a hydraulic cylinder (28).

14. A load-conveying vehicle according to Claim 12, **characterised in that** the push-pull linkage (36) comprises a spindle of an electric spindle drive.

15. A load-conveying vehicle according to any one of the preceding Claims, **characterised in that** the locking jaw (26) has a jaw width of more than 100 mm, in particular more than 150 mm.

## Revendications

1. Véhicule de transport de charges, notamment camion multibenne, comprenant un plateau de chargement (20) comme support pour un caisson multibenne interchangeable (2) à placer sur le plateau de chargement respectivement à soulever du plateau de chargement au moyen d'un dispositif de levage, lequel caisson présente dans sa partie inférieure à l'avant et à l'arrière un axe de palier de basculement (18) correspondant, et comprenant un dispositif d'arrimage du chargement servant à bloquer un caisson interchangeable (2) contre tout glissement sur le plateau de chargement (20),
le dispositif d'arrimage du chargement présentent un élément de verrouillage (24), qui est disposé au niveau du véhicule de transport de charges de manière mobile par rapport au plateau de chargement (20) entre une position de verrouillage et une position de déverrouillage de telle sorte que lors du passage de la position de déverrouillage à la position de verrouillage, il peut entrer en prise verrouillante avec un axe de palier de basculement (18) d'un caisson multibenne interchangeable (2) positionné dans la position de marche normale sur le plateau de chargement (20) pour bloquer le caisson multibenne interchangeable (2),
l'élément de verrouillage (24) présentant une mâchoire de verrouillage (26), avec laquelle lors du passage de la position de déverrouillage à la position de verrouillage, il peut entrer en prise avec un axe de palier de basculement (18) correspondant d'un caisson multibenne interchangeable (2) situé dans la position de marche normale sur le plateau de chargement (20),
**caractérisé en ce que** l'élément de verrouillage (24) est guidé de manière linéairement mobile sur le véhicule de transport de charges entre la position de verrouillage et la position de déverrouillage,
un cliquet de blocage (46) servant à ouvrir et à fermer la mâchoire de verrouillage (26) étant agencé au niveau de l'élément de verrouillage (24).

2. Véhicule de transport de charges selon la revendication 1, **caractérisé en ce que** l'élément de verrouillage (24) est installé dans la partie avant du plateau de chargement (20) et est conçu pour entrer en prise verrouillante avec l'axe de palier de basculement (18) positionné à l'avant d'un caisson multibenne interchangeable (2) situé dans la position de marche normale sur le plateau de chargement (20), lors du passage de la position de déverrouillage à la position de verrouillage.

3. Véhicule de transport de charges selon la revendication 1 ou 2, **caractérisé en ce que** l'élément de verrouillage présente une griffe (25), avec laquelle lors du passage de la position de déverrouillage à la position de verrouillage, il peut recouvrir de l'extérieur un axe de palier de basculement (18) correspondant d'un caisson multibenne interchangeable (2) situé dans la position de marche normale sur le plateau de chargement (20).

4. Véhicule de transport de charges selon l'une quelconque des revendications précédentes, **caractérisé en ce que** le dispositif d'arrimage du chargement présente un dispositif d'entraînement (28) pour l'élément de verrouillage.

5. Véhicule de transport de charges selon la revendication 4, **caractérisé en ce que** le dispositif d'entraînement comprend comme moyen d'entraînement commandable un vérin hydraulique (28) ou/et un moteur électrique.

6. Véhicule de transport de charges selon l'une quelconque des revendications précédentes, **caractérisé en ce que** l'élément de verrouillage peut être déplacé dans une position inactive sous le plan du plateau de chargement.

7. Véhicule de transport de charges selon l'une quelconque des revendications précédentes, **caractérisé en ce que** la mâchoire de verrouillage (26) présente au niveau de son côté intérieur recouvrant par le haut l'axe de palier de basculement (18) lors de son verrouillage, une surface (25) s'étendant en biais vers le bas du côté entrée de la mâchoire de verrouillage (26) du haut vers le fond (31) de la mâchoire de verrouillage (26), laquelle surface sollicite vers le bas l'axe de palier de basculement (18) lors de son verrouillage.

8. Véhicule de transport de charges selon l'une quelconque des revendications précédentes, **caractérisé en ce que** le dispositif d'arrimage du chargement présente aussi bien pour l'axe de palier de basculement avant (18) que pour l'axe de palier de basculement arrière (18) d'un caisson interchangeable (2), un élément de verrouillage (24) respectif de préférence de même type.

9. Véhicule de transport de charges selon la revendication 4, **caractérisé en ce que** le cliquet de blocage (46) est agencé au niveau d'un levier pivotant (34) qui est agencé au niveau de l'élément de verrouillage (24) de manière pivotante entre une première position de butée et une deuxième position de butée au moyen du dispositif d'entraînement (28) de telle sorte que le cliquet de blocage (46) passe à une position d'ouverture libérant la mâchoire de verrouillage (26), lorsque le levier pivotant (34) arrive dans la première position de butée, alors que le cliquet de blocage (46) passe à une position de fermeture fermant la mâchoire de verrouillage (26) lorsque le levier pivotant (34) arrive dans la deuxième position de butée.

10. Véhicule de transport de charges selon la revendication 9, **caractérisé en ce que** le cliquet de blocage (46) est agencé au niveau du levier pivotant (34) de manière pivotante entre une première position de cliquet correspondant à la position de fermeture et une deuxième position de cliquet de telle sorte qu'il peut être chassé de sa position de fermeture vers la deuxième position de cliquet en ouvrant la mâchoire de verrouillage (26) vers l'intérieur de la mâchoire de verrouillage (26) par une force agissant sur le cliquet de blocage (46) de l'extérieur par rapport à la mâchoire de verrouillage, lorsque le levier pivotant (34) se trouve dans sa deuxième position de pivotement.

11. Véhicule de transport de charges selon la revendication 10, **caractérisé en ce que** le cliquet de blocage (46) est précontraint par ressort vers la première position de cliquet.

12. Véhicule de transport de charges selon l'une quelconque des revendications 9 à 11, **caractérisé en ce que** le levier pivotant (34) est relié à une tringle de traction / poussée (36) du dispositif d'entraînement (28) de telle sorte qu'il peut être amené à pivoter par traction respectivement poussée de la tringle de traction / poussée (36) entre les deux positions de butée, dans lequel une poursuite du mouvement de poussée respectivement du mouvement de traction de la tringle de traction / poussée (36) conduit, après avoir amené le levier pivotant (34) dans la première position de butée, au déplacement de l'élément de verrouillage (24) vers la position de déverrouillage, alors qu'une poursuite du mouvement de poussée respectivement du mouvement de traction de la tringle de traction / poussée (36) conduit, après avoir amené le levier pivotant (34) dans la deuxième position de butée, au déplacement de l'élément de verrouillage (24) vers la position de verrouillage.

13. Véhicule de transport de charges selon la revendication 12, **caractérisé en ce que** la tringle de traction / poussée comprend une tige de piston (36) d'un vérin hydraulique (28).

14. Véhicule de transport de charges selon la revendication 12, **caractérisé en ce que** la tringle de traction / poussée comprend une broche d'un entraînement à broche électrique.

15. Véhicule de transport de charges selon l'une quelconque des revendications précédentes, **caractérisé en ce que** la mâchoire de verrouillage (26) présente une largeur supérieure à 100 mm, en particulier supérieure à 150 mm.
